# EUROPÄISCHE PATENTANMELDUNG

(11) **EP 4 032 400 A1**
(43) Veröffentlichungstag der Anmeldung: **27.07.2022**
(21) Anmeldenummer: 22152690.8
(22) Anmeldetag: 21.01.2022
(51) Int. Cl.: A01M 29/08

(54) **VOGELSCHUTZGLAS**

(30) Priorität: 21.01.2021 DE 102021101186
(71) Anmelder: Sedak GmbH & Co. KG, 86368 Gersthofen (DE)
(72) Erfinder: Schlögl, Fritz, 86391 Stadtbergen (DE)
(74) Vertreter: Charrier Rapp & Liebau

(57) **Zusammenfassung**

Die Erfindung betrifft ein Vogelschutzglas, aufweisend eine Glasplatte (1) mit einem sich periodisch wiederholenden Punktmuster, dessen Reflexionseigenschaften sich von den Reflexionseigenschaften der Glasplatte (1) unterscheiden. Bekannte derartige Vogelschutzgläser mussten, um wirksam zu sein, relativ dicht bedruckt werden, was das optische Aussehen und die Durchsichtigkeit beeinträchtigte.

Die Aufgabe, ein Vogelschutzglas so auszubilden, dass es einerseits hochwirksam ist und andererseits die transparente Wirkung des Glases nur geringfügig beeinträchtigt ist, wird dadurch gelöst, dass maximal 5% der Fläche der Glasplatte (1) mit dem Punktmuster bedeckt sind.

## Beschreibung

Die Erfindung betrifft Vogelschutzglas nach dem Oberbegriff des Anspruchs 1. Insbesondere betrifft die Erfindung ein Vogelschutzglas mit einer Glasplatte und einem sich periodisch wiederholenden Punktmuster, dessen Reflexionseigenschaften von demjenigen der Glasplatte unterscheiden.

Der Tod von Vögeln an Glasscheiben ist heute eines der größten bekannten Probleme im Bereich des Vogelschutzes. Viele Gebäude könnten vogelfreundlicher gebaut werden, wenn geeignetes Vogelschutzglas verwendet würde. Vögel können Hindernisse in ihren Lebensräumen üblicherweise leicht umfliegen, sind jedoch auf unsichtbare Hindernisse wie Glasscheiben nicht vorbereitet. Die Kollisionsgefahr ist enorm groß. Verschiedene offizielle Stellen rechnen pro Jahr und Gebäude mit mindestens einem getöteten Vogel. Selbst wenn Vögel nach einem Aufprall zunächst unverletzt erscheinen, geht dennoch jeder Zweite später an inneren Verletzungen ein. Betroffen sind fast alle Vogelgruppen, darunter auch seltene und bedrohte Arten.

Glas ist für Vögel in doppelter Hinsicht gefährlich. Einerseits ist es durchsichtig und damit unsichtbar, andererseits reflektiert es die Umgebung und die reflektierten Bäume und der Himmel spiegeln sich und täuschen einen Lebensraum bzw. eine Flugzone vor.

Bei vielen Neubauten und auch bei der Sanierung von Altbauten wird daher spezielles Vogelschutzglas verwendet. Es handelt sich hierbei z.B. um geripptes, geriffeltes, sandgestrahltes, geätztes, mattiertes oder bedrucktes Glas mit einer Bedeckung von üblicherweise mindestens 25 % der Gesamtfläche. Entsprechende Aufdrucke können auch nachträglich z.B. als Aufklebefolien auf Glasplatten angebracht werden. Es hat sich gezeigt, dass die Silhouetten von Greifvögeln üblicherweise nicht abschrecken, weil die Vögel nicht nur auf die Silhouette, sondern auch auf das Bewegungsmuster achten, welches eine statische Silhouette nicht aufweist.

Die Wiener Umweltanwaltschaft hat sich auf Methoden zur Untersuchung des Vogelanpralls an Glasflächen spezialisiert und lässt Flugversuche in einem sogenannten Flugtunnel durchführen. Die Vögel werden hierbei durch einen 7,5 m langen Tunnel geschickt, der drehbar gelagert ist, handbetrieben dem Stand der Sonne folgt und dadurch immer symmetrischen und weitgehend gleichmäßigen Lichteinfall auf die Prüfscheiben gewährleistet. Der Versuchstunnel ermöglicht Untersuchungen unter Einbezug von Spiegelungen. Am Ende des Tunnels befinden sich zwei nebeneinanderliegende Glasscheiben, von denen eine unmarkiert ist und als Referenzscheibe dient und die andere mit einer Beschichtung oder Bedruckung versehen ist, um deren Eigenschaften als Vogelschutzglas zu überprüfen. Die Testvögel werden tageslichtadaptiert von außen in eine Startröhre gesetzt und starten sofort vom dunklen hinteren Ende zum offenen vorderen Ende des Tunnels. 10 cm vor dem Tunnelende befindet sich ein zum Vogelfang gebräuchliches Netz, welches aufgrund seiner geringen Fadenstärke die frontale Sehschärfe der Vögel unterschreitet und daher nicht wahrgenommen wird. Die Vögel werden somit sanft abgefangen. Ausgewertet wird bei diesem Versuch die Anzahl der Vögel, welche von dem Vogelschutzglas abgeschreckt werden und auf das Referenzglas zufliegen. Ein Verhältnis von 50:50 würde bedeuten, dass das Vogelschutzglas keine Wirkung hat, da genauso viele Vögel dem Vogelschutzglas entgegenfliegen wie dem Referenzglas. Ein Anteil der Vögel zwischen 10 und 20 % lässt das Vogelschutzglas als (bedingt) geeignet erscheinen und ein Anteil von Vögeln unter 10 % die auf das Vogelschutzglas zufliegen, lässt dieses als hochwirksam erscheinen.

Die bisher getesteten Vogelschutzgläser hatten zum Teil hochwirksame Eigenschaften, was jedoch immer mit einer relativ dichten Bedruckung des Vogelschutzglases verbunden war. Beispielsweise wurden Vogelschutzgläser mit einem Punktraster bei einem Deckungsgrad von 27 % als tauglich befunden. In Ausnahmefällen wurden auch gewisse Fortschritte bei einem weißen Punktraster auf Floatglas und einem Deckungsgrad von 6,3 % erzielt.

Dies hat jedoch den Nachteil, dass das Punktraster nicht nur den Vögeln auffällt, sondern auch für den Menschen unangenehm in Erscheinung tritt und einer Glasfläche, welche transparent wirken soll, eine unerwünschte Überlagerung verleiht. Die gleichen Auswirkungen ergeben sich für den Lichteinfall in einem Gebäude und natürlich für die Transparenz des Glases.

Die DE 10 2011 103 132 A1 beschreibt ein Scheibenelement mit einer Schutzvorrichtung gegen Vogelschlag, welches vollflächig mit einer Beschichtung versehen ist, die im Wellenlängenbereich zwischen 320 nm und 420 nm Licht absorbiert und mittels Stokes-Verschiebung im längerwelligen Bereich emittiert und derart für einen Vogel als nicht durchfliegbares Hindernis sichtbar sein soll.

Gegenstand der DE 10 2013 104 212 A1 ist ein Vogelschutzglas, umfassend ein transparentes Substrat mit einer Vogelschutzbeschichtung, welche zumindest eine Schicht aufweist, die wenigstens ein Nitrit aufweist, wobei die genaue Legierung in der genannten Schrift näher definiert ist. Auch hier handelt es sich um eine vollflächige Beschichtung des Glases.

Die CA 2 911 782 beschreibt Vogelschutzfenster mit mindestens einem optischen Aufheller, welcher ebenfalls über die gesamte Fläche des Vogelschutzglases verläuft.

Die US 2009/0047487 A1 hat ein Verfahren und eine Vorrichtung zur Verhinderung des Aufschlagens von Vögeln auf Glas- und Kunststoffoberflächen zum Gegenstand, wobei ein Punktmuster oder vertikale oder horizontale Linien zum Einsatz kommen. Diese Bedruckung ist jedoch nur für Vögel sichtbar und reflektiert in einem Wellenlängenbereich zwischen 300 und 400 nm. Derartige Vogelschutzgläser mit für den Menschen unsichtbarer Bedruckung haben auch auf Vögel keine allzu große Wirkung. Die Anprallrate ist immer noch hoch.

Gegenstand der US2017/0208796 A1 ist eine Beschichtung von Gläsern zur Minimierung von Vogelkollisionen mit einer reflektionsvermindernden Entspiegelungsschicht. Die dort aufgebrachten Schichten sind jedoch, ähnlich wie bei entspiegelten Brillengläsern, lediglich teilweise entspiegelt, nicht aber farblich oder materiell hervorgehoben.

Gegenstand der US2013/0003208 A1 ist ein Verfahren zur Behandlung von Glasoberflächen zur Vermeidung von Vogelschlag, bei welchem ein UVlichtreflektierendes Punktmuster auf die Glasscheibe aufgebracht wird, jedoch keine sichtbare Behandlung der Scheibe erfolgt.

Die DE 10 2016 122 030 A1 beschreibt eine transparente Scheibe, welche zur Verminderung von Vogelschlag mit zwei voneinander beabstandeten Moire-Mustern bedruckt ist.

Gegenstand der JP 07289142 A ist eine Beschichtung von Glas zur Verhinderung von Vogelkollisionen, wobei eine Landschaft mittels eines Punktrasters auf die Glasoberfläche aufgebracht wird.

Schließlich zeigt die US2020/0396983 A1 die Möglichkeit des Aufdruckens von Mustern auf Glasoberflächen durch Einbrenn- bzw. Laminiervorgänge.

Es besteht somit die Aufgabe, ein Vogelschutzglas so auszubilden, dass es einerseits hochwirksam ist und andererseits die transparente Wirkung des Glases nur geringfügig beeinträchtigt.

Gelöst wird diese Aufgabe mit den kennzeichnenden Merkmalen des Anspruchs 1. Vorteilhafte Ausgestaltungen sind den Unteransprüchen entnehmbar.

**Der Erfinder hat erkannt, dass bei einer geeigneten Wahl der Bemusterung des Glases ein Punkt- oder Quadratmuster mit sichtbaren Farben, insbesondere schwarz oder weiß oder durch metallische Partikel im Sinne einer Metallicbeschichtung nur eine geringe Bedeckungsfläche genügt,** um die erwünschten Ergebnisse zu erzielen. Insbesondere genügt es, wenn weniger als 5 % der Fläche der Glasplatte mit dem **sichtbaren** Punktmuster bedeckt sind. Es kann bereits genügen, dass nur maximal 2 % der Fläche mit dem Punktmuster bedeckt sind oder sogar weniger als 1 % der Fläche. Dies führt praktisch dazu, dass das Punktmuster, **obwohl es aus sichtbaren Farbpunkten besteht,** vom Menschen kaum noch wahrgenommen wird und einen üblichen Lichteinfall gewährleistet sowie eine gute Transparenz und Durchsicht.

Bevorzugt kann das Punktmuster aus runden oder quadratischen Punkten bestehen und in einer weiteren bevorzugten Ausführungsform beträgt der Abstand benachbarter Punkte mindestens das Siebenfache des Durchmessers bzw. der Seitenlänge jeden Punktes, vorzugsweise das Zehnfache des Durchmessers bzw. der Seitenlänge. Die Abstände sind also im Verhältnis zu Durchmesser und Seitenlänge relativ groß.

In einer besonders vorteilhaften und wirksamen Ausgestaltung weist das Punktmuster einen Glanzgrad von mindestens 60 % auf. In einer weiteren bevorzugten Ausführungsform enthält das Punktmuster metallische, z.B. silberne oder goldene Partikel. Das Punktmuster kann durch Einbrennen auf die Glasplatte aufgebracht sein oder durch Lamination in die Glasplatte eingebracht sein. **Das Punktmuster ist in jedem Falle sichtbar, also in einer beliebigen, mit dem Auge sichtbaren Farbe, insbesondere, jedoch noch nicht ausschließlich, schwarz oder weiß. Zusätzlich oder alternativ kann es metallisierend sein, also durch Metalleffektpartikel gebildet sein, ähnlich der Metalliclackierung bei Kraftfahrzeugen.**

Als vorteilhaft hat es sich erwiesen, wenn das Punktmuster **in dieser Form** schwarz oder weiß **oder in einer anderen optisch sichtbaren Farbe oder metallisierend** ist.

Zwei Ausführungsbeispiele der Erfindung werden im Folgenden unter Bezugnahme auf die begleitenden Zeichnungen näher beschrieben. Diese zeigen:
- **Fig. 1**: eine Draufsicht auf einen Teil einer erfindungsgemäßen Glasplatte für den Vogelschutz mit einem Punktmuster aus Quadraten;
- **Fig. 2**: eine Glasplatte gemäß Fig. 1, wobei das Punktmuster anstelle von Quadraten aus runden Punkten besteht.

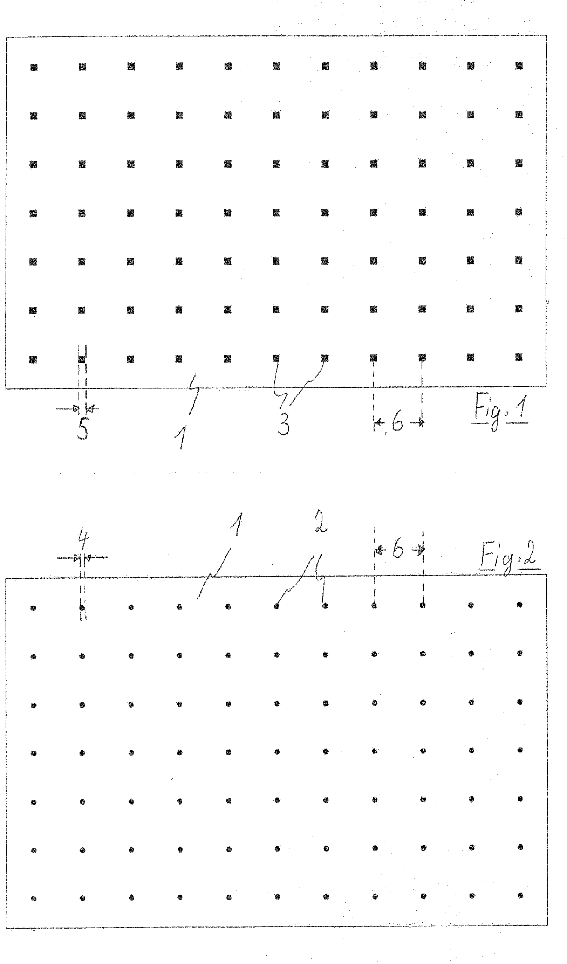

Bei der in Fig. 1 schematisch dargestellten Glasplatte 1 für ein Vogelschutzglas besteht die Glasplatte 1 z.B. aus Floatglas oder aus einem anderen für die Verglasung von Gebäuden geeigneten Glas. Es handelt sich um ein vollständig transparentes Glas, welches - je nach Wunsch des Bauherrn oder Architekten - auch getönt oder beschichtet ausgebildet sein kann. Die Glasplatte 1 weist ein sich periodisch wiederholendes Punktmuster **aus sichtbaren, vorzugsweise schwarzen oder weißen oder metallisierenden Punkten** auf, und zwar im dargestellten Ausführungsbeispiel ein aus kleinen Quadraten (3) bestehendes Punktmuster. Die Quadrate sind doppelt spiegelsymmetrisch angeordnet, sodass sich Reihen und Spalten gleichartiger quadratisch ergeben. Die Seitenlänge 5 jedes quadratischen Punktes 3 beträgt 12 mm und der Abstand 6 benachbarter quadratischer Punkte 3 voneinander - gemessen von Mittelpunkt zu Mittelpunkt - liegt bei 90 mm. Hieraus ergibt sich eine Bedeckungsgrad von nur 1,8 %. Dieser Bruchteil der Glasplatte 1 ist somit mit dem Punktmuster aus quadratischen Punkten 3 bedeckt. Im dargestellten Ausführungsbeispiel liegt der Abstand 6 benachbarter Punkte, der als Abstand 6 der Mittelpunkte benachbarter Punkte 3 voneinander definiert ist, über dem Siebenfachen der Seitenlänge 5 jedes quadratischen Punkts 3.

In einer anderen Ausführungsform, wie sie in Fig. 2 dargestellt ist, werden anstelle der quadratischen Punkte 3 kreisrunde Punkte 2 auf die Glasplatte 1 aufgebracht. **Auch hier sind die einzelnen Punkte in einer sichtbaren Farbe, insbesondere schwarz/weiß oder metallisierend aufgebracht.** Im dargestellten Ausführungsbeispiel ist die Fläche der Glasplatte 1 in gleicher Weise doppelt achsensymmetrisch, also mit Zeilen und Spalten mit runden Punkten 2 bedeckt. Der Durchmesser jedes runden Punktes 2 liegt bei 9 mm und der Abstand 6 - wiederum gemessen von Mittelpunkt zu Mittelpunkt - liegt bei 90 mm. In dieser Ausführungsform liegt also der Abstand 6 benachbarter Punkte 2 beim Zehnfachen des Durchmessers 4 jedes runden Punkts 2. Der Gesamtbedeckungsgrad liegt bei diesem Ausführungsbeispiel nur bei 0,8 % der Fläche der Glasplatte 1.

In beiden Ausführungsbeispielen, sowohl nach Figur 1 als auch nach Figur 2, weisen die Punktmuster einen Glanzgrad von mindestens 60 % auf. Der Glanzgrad kann jedoch darunter oder darüber liegen. **Das Punktmuster kann entweder schwarz oder weiß oder in einer Farbe gehalten sein und/oder metallisierend sein, wobei auch eine Kombination von schwarz bzw. weiß bzw. einer anderen Farbe mit einem metallisierenden Effekt möglich ist.**

Vorzugsweise, jedoch nicht notwendigerweise, weist das Punktmuster jeweils metallische Partikel auf, welchen aus Gold, Silber oder anderen Metallen bestehen können.

In beiden Ausführungsformen kann das Punktmuster beispielsweise durch Einbrennen auf die Glasplatte 1 oder durch Lamination in die Glasplatte 1 eingebracht sein. In vorteilhaften Ausgestaltungen können sowohl bei der Ausführungsform nach Fig. 1 als auch bei der nach Fig. 2 die Punkte 3 bzw. 2 in schwarzer Farbe oder in weißer Farbe ausgeführt sein.

Versuche mit dem in der Beschreibungseinleitung beschriebenen Flugtunnel haben gezeigt, dass bei der Ausführungsform nach Fig. 1 (auf quadratische Punkte 3) nur 10 % der Vögel auf das zu prüfende Vogelschutzglas zugesteuert sind. Es ergibt sich somit eine Wirksamkeit von 90 %.

Bei entsprechenden Versuchen mit dem Vogelschutzglas nach Fig. 2 (runde Punkte) sind immerhin nur 14 % der getesteten Vögel auf das Vogelschutzglas zugeflogen, was eine Wirksamkeit von 86 % ergibt.

Überraschenderweise hat sich somit gezeigt, dass mit dem verwendeten Punktraster Bedeckungsflächen von weit weniger als 5 %, in einem Falle 1,8 % und in dem anderen Falle nur 0,8 % ausreichend sind, um höchst befriedigende Ergebnisse im Test zu erzielen.

## Patentansprüche

1. Vogelschutzglas, aufweisend eine Glasplatte (1) mit einem sich periodisch wiederholenden Punktmuster, dessen Reflexionseigenschaften sich von den Reflexionseigenschaften der Glasplatte (1) unterscheiden, wobei maximal 5% der Fläche der Glasplatte (1) mit dem Punktmuster bedeckt sind, **dadurch gekennzeichnet, dass** das Punktmuster in schwarzer oder in weißer Farbe ausgeführt ist **und/oder metallische Partikel enthält.**

2. Vogelschutzglas nach Anspruch 1, **dadurch gekennzeichnet, dass** maximal 2% der Fläche der Glasplatte (1) mit dem Punktmuster bedeckt sind.

3. Vogelschutzglas nach Anspruch 2, **dadurch gekennzeichnet, dass** maximal 1% der Fläche der Glasplatte mit dem Punktmuster bedeckt sind.

4. Vogelschutzglas nach einem der voranstehenden Ansprüche, **dadurch gekennzeichnet, dass** das Punktmuster aus runden Punkten (2) besteht.

5. Vogelschutzglas nach einem der Ansprüche 1 bis 3, **dadurch gekennzeichnet, dass** das Punktmuster aus quadratischen Punkten (3) besteht.

6. Vogelschutzglas nach einem der voranstehenden Ansprüche, **dadurch gekennzeichnet, dass** der Abstand (6) benachbarter Punkte (2, 3), gemessen zwischen den Mitten der Punkte (2, 5), mindestens das Siebenfache des Durchmessers (4) bzw. der Seitenlänge (5) jeden Punktes (2, 3) beträgt.

7. Vogelschutzglas nach Anspruch 6, **dadurch gekennzeichnet, dass** der Abstand (6) benachbarter Punkte (2, 3), gemessen zwischen den Mitten der Punkte (2, 3), mindestens das Zehnfache des Durchmessers bzw. der Seitenlänge jeden Punktes (2, 3) beträgt.

8. Vogelschutzglas nach einem der voranstehenden Ansprüche, **dadurch gekennzeichnet, dass** das Punktmuster einen Glanzgrad von mindestens 60% aufweist.

9. Vogelschutzglas nach einem der voranstehenden Ansprüche, **dadurch gekennzeichnet, dass** das Punktmuster durch Einbrennen auf die Glasplatte (1) aufgebracht ist.

10. Vogelschutzglas nach einem der Ansprüche 1 bis **8, dadurch gekennzeichnet, dass** das Punktmuster durch Lamination in die Glasplatte (1) eingebracht ist.
